# EUROPEAN PATENT SPECIFICATION

(11) **EP 4 360 845 B1**
(45) Date of publication and mention of the grant of the patent: **07.01.2026**
(21) Application number: 21947220.6
(22) Date of filing: 24.11.2021
(51) Int. Cl.: B29C 33/02, B29C 33/26, B29C 35/02, B29D 30/06, B29L 30/00

(54) **TIRE MOLDING MOLD AND TIRE MANUFACTURING METHOD**
REIFENFORM UND REIFENHERSTELLUNGSVERFAHREN
MOULE DE MOULAGE DE PNEUMATIQUE ET PROCÉDÉ DE FABRICATION DE PNEUMATIQUE

(30) Priority: 22.06.2021 JP 2021103648
(43) Date of publication of application: 01.05.2024
(73) Proprietor: BRIDGESTONE CORPORATION, Chuo-ku Tokyo 104-8340 (JP)
(72) Inventor: ISHIHARA Yasuyuki, Tokyo 104-8340 (JP)
(74) Representative: Marks & Clerk LLP
(86) International application number: PCT/JP2021/043049
(87) International publication number: WO 2022/269941

(56) References cited:
- EP-A1- 1 935 624
- JP-A- 2018 202 787
- JP-A- 2018 202 787
- JP-A- S52 103 479
- JP-A- S52 103 479
- US-A- 3 989 791

## Description

### TECHNICAL FIELD

This disclosure relates to a mold for forming a tire and a tire production method.

### BACKGROUND

In a known conventional mold for forming a tire for use in vulcanization molding of an unvulcanized raw tire to produce a tire, it is known that an annular tread molding part (a tread mold) for forming a tread of a tire is divided into a plurality of segments arranged in a circumferential direction and is configured to be opened and closed by moving each of the segments in a radial direction (for example, see PTLs 1 to 3).

### CITATION LIST

### Patent Literature

PTL 1: JP 2000-326332 A
PTL 2: JP 2000-334740 A
PTL 3: JP 2009-149079 A
PTL 4: EP 1935624 A1
PTL 5: US 3989791 A
PTL 6: JP S52-103479 A
PTL 7: JP 2018-202787 A

EP 1935624 A1 discloses a tire mold having a first mold half, a second mold half, and a center ring portion formed of a plurality of tread segments. Each mold half has an inner surface with a sidewall molding portion and each of said tread segments has an inner surface having a tread molding portion, each tread molding portion terminating at a first split plane and a second split plane. Each of the center ring segments further comprises a first segment register surface for engagement with a first mold register surface of the first mold half and a second segment register surface for engagement with a second mold reverse register surface of the second mold half. Each of the tread segments has a radially outward flange forming a hinge for rotatably mounting each tread segment to the second mold half.

US 3989791 A discloses a method and apparatus to permit molding of a rigid breaker tire in a single-phase diaphragm press without damage caused by axial movement of the tread-forming segments relative to the tire carcass. In the mold, the tread segments are mounted to pivot about fixed longitudinal axes as the press is opened and closed so that they move simultaneously both radially and axially with respect to the mold cavity.

JP S52-103479 A discloses a sector-type mold comprising a series of tread molding sectors, an axially movable upper mold for the first flank molding of the tire and a means for cooperating with the plurality of sectors to control the opening and closing action of the mold. The plurality of elastic means inserted between the fixed lower mold and the plurality of sectors faces upward and outward to release the tire when power is applied to the upper mold. At the same time, it is retracted and rocked in the radial direction. The plurality of sectors are constantly pressed in the radial direction, and the upper mold is movable in the radial direction without being influenced by the means for radially approaching the sectors.

JP 2018-202787 A discloses a device to open/close a plurality of split molds with ease by suppressing occurrence of galling in a plurality of the split molds. The plurality of split molds are arranged in a ring shape along a tire circumferential direction to mold a tire. A rotation support part of a support member is connected to one end part in a tire width direction of the split mold. The support member supports the split mold to be rotatable toward the outside and the inside in the tire radial direction with the rotation support part as a center. A moving mechanism moves the split mold at least by rotating, to arrange the split molds at a molding position for molding the tire and a separation position separated from the tire.

### SUMMARY

### (Technical Problem)

However, in the above-described conventional mold for forming a tire or the above-described conventional tire production method, when the tire is released from the tread molding part after vulcanization molding, each of the segments is moved toward a radially outer side with maintaining the orientation of each of the segments to a tread of the tire. As a result, all portions of the tread design surface for forming the tread of the segment are to peel off from the tread simultaneously. Therefore, there has been a problem in that a great driving force is required for driving the segments in the initial stage of mold releasing of the tire.

This disclosure has been accomplished in view of the above-described problem and it is an object of this disclosure to provide a mold for forming a tire and a tire production method which can reduce driving force required for driving the segments in the initial stage of mold releasing of the tire.

### (Solution to Problem)

The mold for forming the tire of this disclosure is a mold for forming a tire according to claim 1.

The mold for forming the tire of this disclosure is configured in such a way that each of the segments includes a holder to be driven toward a radially outer side by a container when the tread molding part is opened, the design surface dividing mold part is fixed to a radially inner side of the holder, and the holder is supported by the rotatable shaft to be rotatable in relation to the container.

In an embodiment, the mold for forming the tire of this disclosure can be configured in such a way that the rotatable shaft is disposed on a radially outer side in a one-sided manner in relation to the center of the holder in the radial direction, and on one side in a direction of the axis of the tread molding part in relation to the center of the holder in the direction of the axis of the tread molding part.

The mold for forming the tire is configured to include a spring member which is attached between the holder and the container corresponding to the spring member to retain the design surface dividing mold part corresponding to the spring member at a predetermined position, and when the tread molding part is opened, elastically deforms to allow for rotation of the holder in relation to the container.

The tire production method of this disclosure is a tire production method according to claim 3.

### (Advantageous Effect)

This disclosure can provide a mold for forming a tire and a tire production method which can reduce driving force required for driving the segments in the initial stage of mold releasing of the tire.

### BRIEF DESCRIPTION OF THE DRAWINGS

In the accompanying drawings:
FIG. 1 is a cross-sectional view of a mold for forming a tire according to an embodiment of this disclosure, which is illustrated in a front view;
FIG. 2 is a cross-sectional view of the tread molding part illustrated in FIG. 1, which is illustrated in a planar view;
FIG. 3 is a cross-sectional view of the mold for forming the tire illustrated in FIG. 1 when the mold for forming the tire is opened, which is illustrated in a front view;
FIG. 4 is a cross-sectional view of the tread molding part illustrated in FIG. 1 when the tread molding part is opened, which is illustrated in a planar view;
FIG. 5 is an enlarged cross-sectional view of detailed structure of the main portion of the mold for forming the tire illustrated in FIG. 1, which is illustrated in a front view;
FIG. 6 is a cross-sectional view of one segment and an intermediate container illustrated in FIG. 5 in a planar view;
FIG. 7 is a cross-sectional view illustrating the details of the spring member illustrated in FIG. 5; and
FIG. 8 is a cross-sectional view illustrating one segment illustrated in FIG. 5 in mold releasing of the tire, which is illustrated in a planar view.

### DETAILED DESCRIPTION

By way of example, a mold for forming a tire and a tire production method according to an embodiment of this disclosure will now be described in detail with reference to the drawings. In this regard, common members and portions appearing in the drawings have the same reference signs.

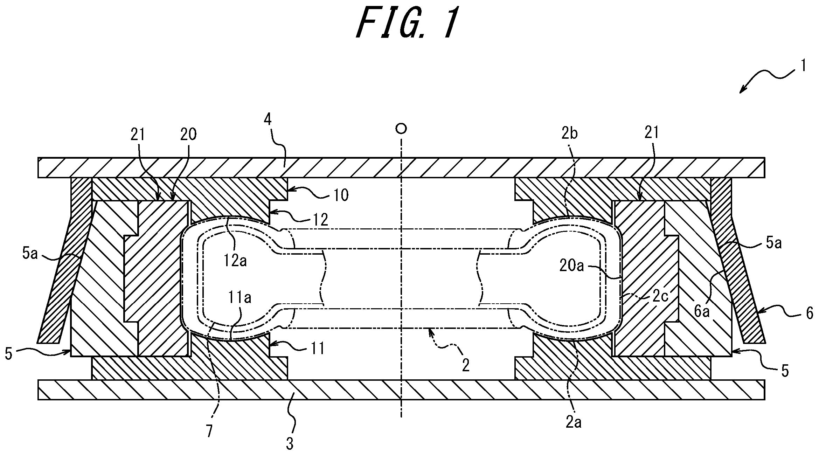

A mold for forming a tire 1 illustrated in FIG. 1 according to an embodiment of this disclosure is for use in forming an unvulcanized (before vulcanization) raw tire based on a synthetic rubber into a predetermined shape with the raw tire being vulcanized to produce a tire 2.

In this regard, the tire 2 is a hollow tire based on a synthetic rubber including a pair of sidewalls 2a, 2b and a tread 2c, and is shaped to provide the interior of the tire 2 with a space for filling of a gas such as air or nitrogen.

The mold for forming the tire 1 includes a sidewall molding part 10 and a tread molding part 20.

For example, the sidewall molding part 10 can include an annular lower sidewall molding part 11 fixed to a top surface of a lower container 3, and an annular upper sidewall molding part 12 fixed to a bottom surface of an upper container 4.

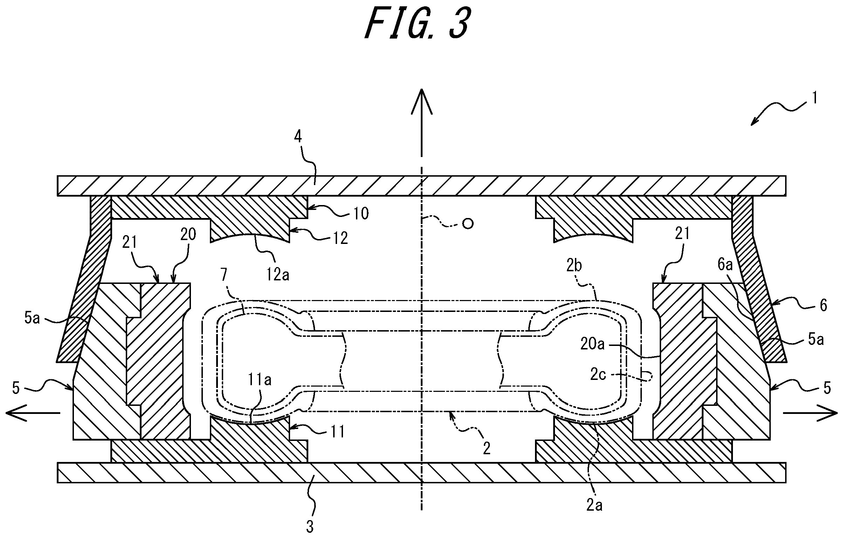

The sidewall molding part 10 can dispose (accommodate) an annular tire 2 or a raw tire between the lower sidewall molding part 11 and the upper sidewall molding part 12 to be in an orientation by which the central axis of the raw tire becomes coaxial with the central axis O of the sidewall molding part 10. The lower sidewall molding part 11 includes a lower sidewall design surface 11a, which is in the form of a ring around the central axis O and is oriented toward the upward direction. The lower sidewall molding part 11 can form an outer surface of a sidewall 2a of one of the tire 2 and the raw tire (any of which is oriented toward the downward direction in FIG. 1) by the lower sidewall design surface 11a. Similarly, the upper sidewall molding part 12 includes an upper sidewall design surface 12a, which is in the form of a ring around the central axis O and is oriented toward the downward direction. The upper sidewall molding part 12 can form an outer surface of a sidewall 2b of the other of the tire 2 and the raw tire (any of which is oriented toward the upward direction in FIG. 1) by the upper sidewall design surface 12a. As illustrated in FIG. 3, by moving the upper container 4 upwardly (the direction in which the upper container 4 and the lower container 3 is moved away from each other along the central axis of the tire 2) and relatively to the lower container 3, the sidewall molding part 10 is opened and the tire 2 is released from the sidewall molding part 10. By moving the upper container 4 downwardly to its original position illustrated in FIG. 1, the sidewall molding part 10 in an opened configuration is closed to allow for forming of the tire 2 or the raw tire.

In this regard, modifications can be made to the configuration of the sidewall molding part 10 as appropriate, and examples of such modifications include a configuration in which the sidewall molding part 10 is opened by moving the lower container 3 downwardly and relatively to the upper container 4.

The tread molding part 20 is annular and coaxial with the sidewall molding part 10 and is disposed adjacent to a radially outer side of the lower sidewall molding part 11 and the upper sidewall molding part 12. The inner circumferential surface, oriented toward the radially inner side, of the tread molding part 20 is a tread design surface 20a for forming an outer circumferential surface of the tread 2c of the tire 2.

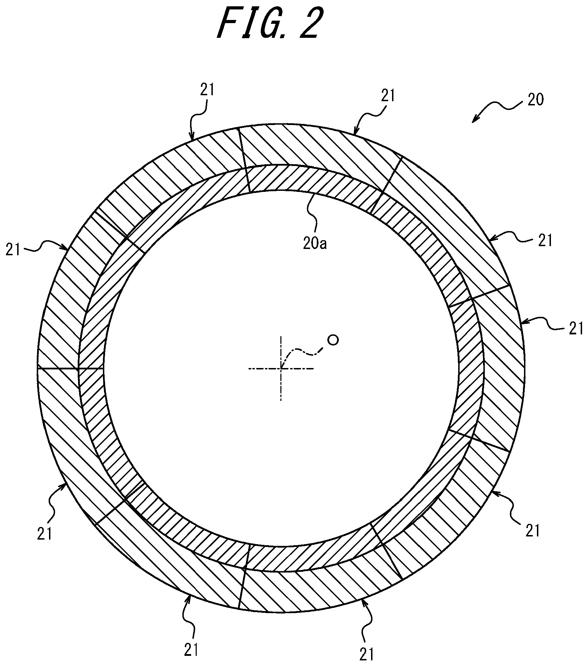

As illustrated in FIG. 2, the tread molding part 20 is divided into a plurality of segments arranged in a circumferential direction 21. Each of the segments 21 is in the form of arc in a planar view and the segments 21 are combined in a circumferentially arranged manner to constitute a tread molding part 20, which is an annular mold as a whole. In this embodiment, the tread molding part 20 is divided into nine segments 21 having the same length in a circumferential direction. In this regard, the division number of the tread molding part 20 in a circumferential direction is preferably, but not limited to, 7 to 13 and can be changed as appropriate.

As illustrated in FIG. 1, an outer circumferential surface, oriented toward the radially outer side, of each of the segments 21 is fixed to the interior of intermediate container 5 corresponding to each of the segments 21, and each of the segments 21 is driven by the intermediate container 5 to move toward a radial direction centered on the axis of the tread molding part 20 (central axis O). The tread molding part 20 can be opened and closed by moving each of the segments 21 in a radial direction.

More particularly, the outer circumferential surface of the intermediate container 5 oriented toward the radially outer side is provided with a tapered surface 5a inclined in such a way that the outer diameter of the tapered surface 5a gradually becomes smaller toward the upward direction. To the bottom surface of the upper container 4, an annular outer ring 6 disposed on the radially outer side of the intermediate container 5 is fixed. The inner circumferential surface of the outer ring 6 oriented toward the radially inner side is provided with a tapered surface 6a inclined in such a way that the outer diameter of the tapered surface 6a gradually becomes smaller toward the upward direction. The outer ring 6 is coupled with each of the intermediate containers 5, for example, by using a guide member (not illustrated) in such a way that the tapered surface 6a slides along the tapered surface 5a of the intermediate container 5 in an up-down direction.

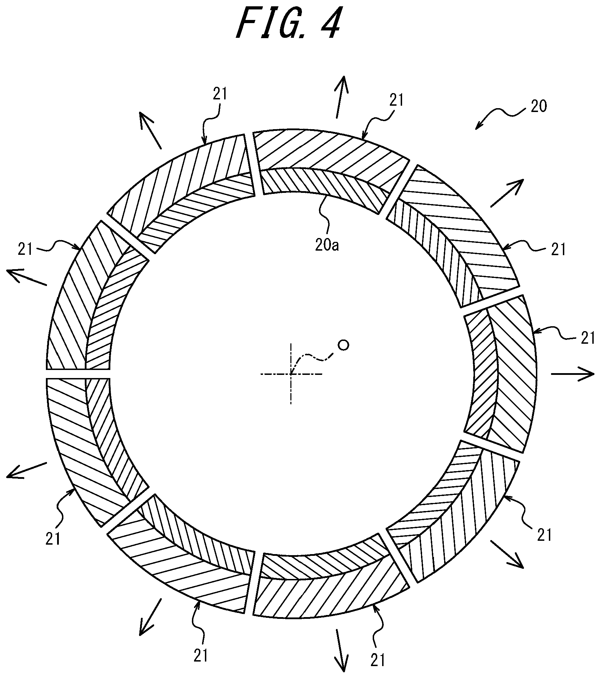

When the upper container 4 is moved upwardly and relatively to the lower container 3, the outer ring 6 is moved upwardly and relatively to each of the intermediate containers 5 with the tapered surface 6a being sliding along the tapered surface 5a of the intermediate container 5. As a result of this, as illustrated in FIG. 3, each of the intermediate containers 5 is moved toward the radially outer side centered on the axis of the tread molding part 20. When each of the intermediate containers 5 is moved toward the radially outer side centered on the axis of the tread molding part 20, as illustrated in FIGs. 3 and 4, each of the segments 21 is driven by an intermediate container 5 corresponding to each of the segments 21 to move, together with the intermediate container 5, toward the radially outer side. As a result of this, the tread molding part 20 is opened to be in a position at which the tread design surface 20a is separated from the tread 2c of the tire 2 or the raw tire. In this regard, the tread molding part 20 can be configured in such a way that, after the tread molding part 20 is opened as described above, the tread molding part 20 suspended by the outer ring 6 is moved upwardly together with the upper container 4 to a position (an upper position in relation to the position illustrated in FIG. 3) at which the tire 2 after forming can be removed. When the upper container 4 is moved downwardly to its original position illustrated in FIG. 1, the tread molding part 20 is moved downwardly to a position adjacent to the lower sidewall molding part 11. Subsequently, the outer ring 6 is moved downwardly in relation to each of the intermediate containers 5, and each of the intermediate containers 5 is moved toward the radially inner side centered on the axis of the tread molding part 20. As a result of this, as illustrated in FIGs. 1 and 2, each of the segments 21 is driven by the intermediate container 5 corresponding to each of the segments 21 to move, together with the intermediate container 5, toward the radially inner side, and the tread molding part 20 is closed to allow for forming of the tire 2 or the raw tire.

As described above, in the mold for forming the tire 1 of this embodiment, the annular tread molding part 20 is divided into a plurality of segments 21 arranged in a circumferential direction, and is configured to be opened and closed by moving each of the segments 21 in a radial direction.

The opening and closing mechanism of the tread molding part 20 is not limited to a configuration using the outer ring 6 but various configurations can be employed.

The mold for forming the tire 1 includes a bladder 7 which is disposed in the interior of the raw tire and expanded by supplying of pressurized steam. Also, the mold for forming the tire 1 includes a heater (not illustrated) for heating the sidewall molding part 10 and the tread molding part 20. The location of the heater can be determined as appropriate.

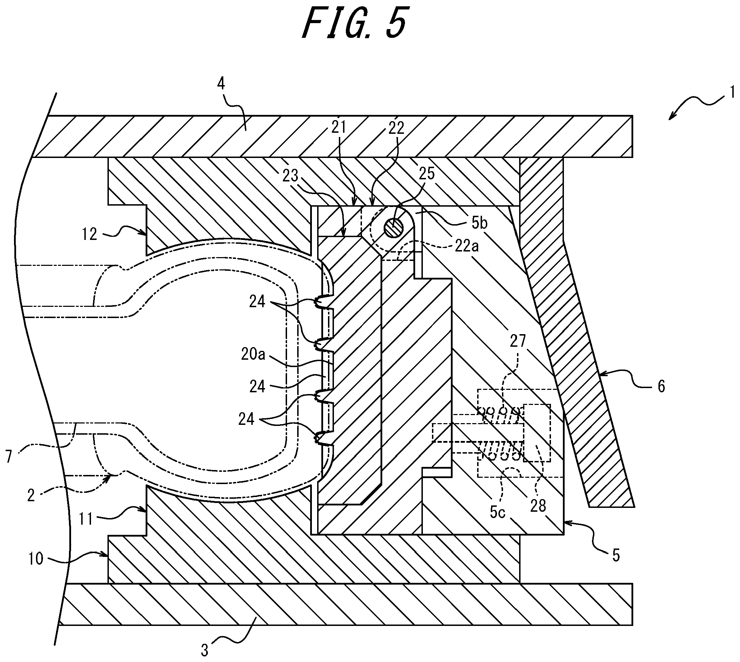

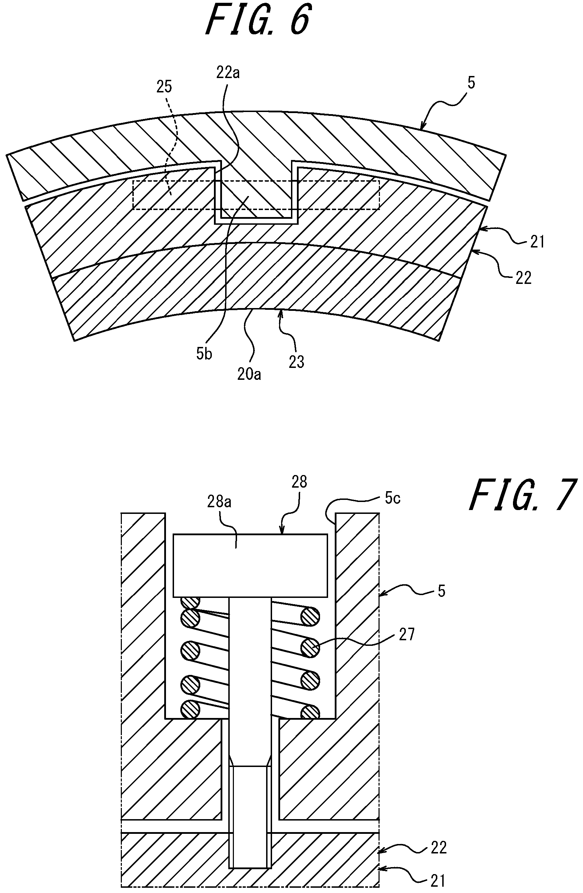

As illustrated in FIGs. 5 and 6, in the mold for forming the tire 1 of this embodiment, each of the plurality of the segments 21 constituting the tread molding part 20 include a design surface dividing mold part 23.

Each of the segments 21 include a holder 22. The design surface dividing mold part 23 is disposed on the radially inner side of the holder 22 and is fixed to the holder 22 by using a fixing member such as a bolt (not illustrated).

The holder 22 is a portion which is driven toward the radially outer side by the intermediate container 5 when the tread molding part 20 is opened. When the tread molding part 20 is closed, the holder 22 is driven toward the radially inner side by the intermediate container 5. The holder 22 can be formed, for example, by cutting a block made of metal such as low carbon steel.

The design surface dividing mold part 23 is a portion which constitutes a tread design surface 20a for forming the tread 2c of the tire 2. As illustrated in FIG. 6, the design surface dividing mold part 23 is in the form of arc in a planar view and a surface oriented toward the radially inner side constitutes a circumferentially divided portion of the tread design surface 20a.

As illustrated in FIG. 5, the design surface dividing mold part 23 can be configured in such a way that the tread design surface 20a is provided with a plurality of projections 24 which protrude in a radial direction from the tread design surface 20a toward the radially inner side. The plurality of the projections 24 are used to form, for example, grooves or sips, which constitute a tread pattern, on the tread 2c of the tire 2 in vulcanization molding. The plurality of the projections 24 can be of various shapes or sizes (length) tailored to the tread pattern, such as a plurality of projections 24 extending in a tire width direction and a plurality of projections 24 extending in a tire circumferential direction. In this regard, the tread design surface 20a may not be provided with the projections 24.

The design surface dividing mold part 23 is preferably formed by casting of a metal material having high thermal conductivity such as, for example, an aluminum alloy. In this case, for example, rib-shaped or blade-shaped projections 24 made of steel can be provided by integrating with the design surface dividing mold part 23 in casting of the design surface dividing mold part 23.

The design surface dividing mold part 23 is configured to rotate around the rotatable shaft 25 perpendicular to a direction of movement of the segments 21 and also to an axis (central axis O) of the tread molding part 20 when the tread molding part 20 is opened after vulcanization molding of the tire 2.

In this embodiment, the holder 22 is supported by the rotatable shaft 25 perpendicular to (parallel to a direction tangential to the tire 2) a direction of movement of the segments 21 and also to an axis of the tread molding part 20 to be rotatable in relation to the intermediate container 5. The design surface dividing mold part 23 is configured to rotate, together with the holder 22, around the rotatable shaft 25 in relation to the intermediate container 5.

Also, in this embodiment, the rotatable shaft 25 is disposed on a radially outer side in a one-sided manner in relation to the center of the holder 22 in the radial direction, and on one side in a direction of the axis of the tread molding part 20 (in FIG. 5, the upper side) in relation to the center of the holder 22 in the direction of the axis of the tread molding part 20.

More particularly, as illustrated in FIG.s 5 and 6, an upper end of a back surface of the holder 22 oriented toward the radially outer side is provided with a recess 22a. An upper end of the surface of the intermediate container 5 oriented toward the radially inner side is provided integrally with a protrusion 5b protruding toward the radially inner side. The protrusion 5b is disposed in the interior of the recess 22a. The rotatable shaft 25 extends through a protrusion 5b disposed in the interior of the recess 22a with both ends of the rotatable shaft 25 being supported by the holder 22. As a result of this, at the recess 22a, the holder 22 is supported by the rotatable shaft 25 extending through the protrusion 5b of the intermediate container 5 to be rotatable in relation to the intermediate container 5.

As a result of the above-described configuration, the holder 22 and the design surface dividing mold part 23 are configured to rotate, from a predetermined position, around a rotatable shaft 25 perpendicular to a direction of movement of the segments 21 and also to an axis of the tread molding part 20 in relation to the intermediate container 5 in such a way that the lower end side is moved toward the radially inner side in relation to the upper end side on which the rotatable shaft 25 is disposed when the tread molding part 20 is opened after vulcanization molding of the tire 2. In this regard, the term "predetermined position" refers to a position at which the design surface dividing mold part 23 is in an orientation by which a tread design surface 20a provided on a design surface dividing mold part 23 is continuously connected, in a circumferentially arranged manner, with a tread design surface 20a provided on a design surface dividing mold part 23 of another segment 21.

The tread molding part 20 is configured to include a spring member 27 which is attached between the holder 22 and the intermediate container 5 corresponding to the spring member 27 to retain the design surface dividing mold part 23 corresponding to the spring member 27 at a predetermined position, and when the tread molding part 20 is opened, elastically deforms to allow for rotation of the holder 22 in relation to the intermediate container 5. As illustrated in FIG. 7, in this embodiment, a bolt 28 is fixed to the back surface of the holder 22 and a spring member 27 is disposed between a head 28a of the bolt 28 disposed in a hole 5c provided in the intermediate container 5 and a bottom wall of the hole 5c in the intermediate container 5. The spring member 27 is a helical compression spring. The spring member 27 biases a portion of the holder at a distance from the rotatable shaft 25 22 toward a direction in which the portion is attracted toward the intermediate container 5. As a result, the spring member 27 retains the design surface dividing mold part 23 fixed to the holder 22 at a predetermined position together with a holder 22, and when the tread molding part 20 is opened, elastically deforms between the head 28a of the bolt 28 and the bottom wall of the hole 5c to allow for rotation of the design surface dividing mold part 23 fixed to the holder 22 in relation to the intermediate container 5.

Next, a method for vulcanization molding of a raw tire to produce a tire 2 having a predetermined shape by using a mold for forming a tire 1 having the above-described configuration, that is, a tire production method as an embodiment of this disclosure will be described.

First of all, a sidewall molding part 10 and a tread molding part 20 are opened to dispose a raw tire in the interior of a mold for forming a tire 1, and subsequently, the sidewall molding part 10 and the tread molding part 20 are closed.

Next, a bladder 7 is expanded by supplying pressurized steam to the bladder 7 disposed in the interior of the raw tire. As a result, sidewalls of the raw tire are pressed against a lower sidewall design surface 11a and an upper sidewall design surface 12a of the sidewall molding part 10, respectively, and a tread is pressed against a tread design surface 20a of the tread molding part 20. In this situation, a heater is used to heat the sidewall molding part 10 and the tread molding part 20, and such heat causes vulcanization of the synthetic rubber constituting the raw tire to form a tire 2 having a predetermined shape.

After forming of the tire 2 is completed, the sidewall molding part 10 and the tread molding part 20 are opened to remove a formed tire 2.

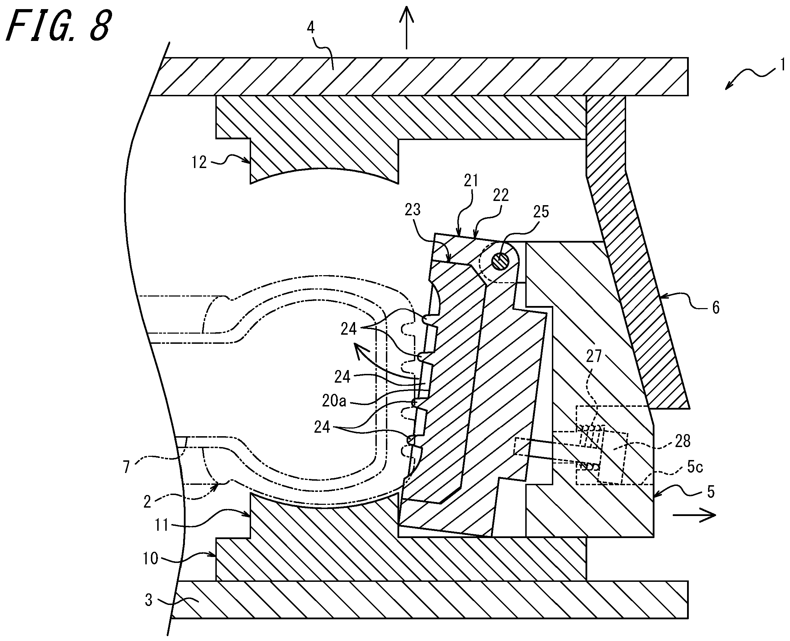

When each of the segments 21 is moved toward the radially outer side to open the tread molding part 20 after vulcanization molding of the tire 2, driving force, which is required for resisting close contact of the tread 2c of the tire 2 with the inner circumferential surface of the tread design surface 20a and also for resisting undercut resistance caused between the tread 2c of the tire 2 and the projections 24, is applied to each of the design surface dividing mold parts 23 by the medium of the holder 22. At this time, the design surface dividing mold part 23 in each of the segments 21 is supported to be rotatable around the rotatable shaft 25 in relation to the intermediate container 5 by the medium of the holder 22. Therefore, when the tread molding part 20 is opened after vulcanization molding of the tire 2, as illustrated in FIG. 8, the design surface dividing mold part 23 spontaneously rotates (panning action), together with the holder 22, around the rotatable shaft 25 perpendicular to a direction of movement of the segments 21 and also to an axis of the tread molding part 20 in relation to the intermediate container 5 in such a way that the lower end side is moved toward the radially inner side in relation to the upper end side on which is disposed the rotatable shaft 25.

As described above, in the method for producing the tire by using the mold for forming the tire 1 of this embodiment, when the tread molding part 20 is opened after vulcanization molding of the tire 2, the tire 2 can be released from the tread molding part 20 with the design surface dividing mold part 23 being rotated around the rotatable shaft 25 perpendicular to the direction of movement of the segments 21 and also to an axis of the tread molding part 20. As a result of this, the tread 2c of the tire 2 is gradually released from the side of one end (in FIG. 8, the upper end side) of the design surface dividing mold part 23 in a width direction of the tire 2, followed by releasing from the side of the other end (in FIG. 8, the lower end side). Thus, outside air is gradually introduced between the tread 2c and the tread design surface 20a from the side of one end to allow for reducing mold releasing resistance of the tread 2c of the tire 2 from the tread design surface 20a in the initial stage of mold releasing of the tire 2. Therefore, force required for mold releasing of the tread 2c of the tire 2 from the tread design surface 20a in the initial stage of mold releasing of the tire 2 is reduced, and thus, driving force required for driving the segments 21 in the initial stage of mold releasing of the tire 2 can be reduced. Also, driving force applied to the segments 21 in mold releasing of the tire 2 can be reduced, and as a result, the entire production device including the mold for forming the tire 1 can be downsized to reduce the production costs. In addition, mold releasing resistance of the tread 2c of the tire 2 from the tread design surface 20a can be reduced, and as a result, the generation of residual strain (permanent deformation) in the tire 2 after the mold releasing can be suppressed to improve the initial performance of the tire 2.

In particular, in this embodiment, the rotatable shaft 25 is disposed on a radially outer side in a one-sided manner in relation to the center of the radial direction of the holder 22, and on one side in a direction of the axis of the tread molding part 20 in relation to the center of the holder 22 in the direction of the axis of the tread molding part 20. Therefore, driving force for moving the segments 21 toward the radially outer side is disproportionately applied to the side of one end of the holder 22 or the design surface dividing mold part 23 in a width direction of the tire 2. As a result, when the tread molding part 20 is opened after vulcanization molding of the tire 2, the design surface dividing mold part 23 can spontaneously rotate around the rotatable shaft 25 more reliably. Therefore, driving force required for driving the segments 21 in the initial stage of mold releasing of the tire 2 can be reduced more reliably.

Also, in mold releasing of the tire 2 from the tread molding part 20, each of the design surface dividing mold parts 23 rotates around the rotatable shaft 25 to reduce undercut resistance of the tread 2c of the tire 2 caused by the projections 24. As a result, driving force required for driving the segments 21 in the initial stage of mold releasing of the tire 2 can be further reduced. In addition, in mold releasing of the tire 2 from the tread molding part 20, defects such as permanent deformation in the formed tread 2c of the tire 2 and the failure of the projections 24 can be suppressed by preventing excessively high undercut resistance.

In addition, in the mold for forming the tire 1 of this embodiment, the tread molding part 20 includes the spring member 27 which is attached between the holder 22 and the intermediate container 5 corresponding to the spring member 27 to retain the design surface dividing mold part 23 corresponding to the spring member 27 at a predetermined position, and when the tread molding part 20 is opened, elastically deforms to allow for rotation of the holder 22 in relation to the intermediate container 5. As a result, the design surface dividing mold part 23 is ensured to be retained at a predetermined position in vulcanization molding of a raw tire to improve the formability of the tire 2. In addition, when the tread molding part 20 is opened after vulcanization molding of the tire 2, the design surface dividing mold part 23 can spontaneously rotate, together with the holder 22, around the rotatable shaft 25 in relation to the intermediate container 5. In consequence, force required for mold releasing of the tread 2c of the tire 2 from the tread design surface 20a in the initial stage of mold releasing of the tire 2 can be reduced more reliably.

As a matter of course, this disclosure is not limited to the above-described embodiment and a variety of modifications are possible without departing from the scope of this disclosure, which is limited only by the appended claims.

For example, in the above-described embodiment, each of the segments 21 is provided with the holder 22, the design surface dividing mold part 23 is fixed to the holder 22, and the holder 22 is supported by the rotatable shaft 25 to be rotatable in relation to the intermediate container 5. However, it is also possible that the holder 22 is not provided, and the design surface dividing mold part 23 is supported on the intermediate container 5 by the rotatable shaft 25.

Also, a variety of the positions of the rotatable shaft 25 can be possible as long as the position of the rotatable shaft 25 is a position by which the design surface dividing mold part 23 spontaneously rotates around the rotatable shaft 25 when the tread molding part 20 is opened after vulcanization molding of the tire 2.

### REFERENCE SIGNS LIST

- 1: Mold for forming a tire
- 2: Tire
- 2a: Sidewall
- 2b: Sidewall
- 2c: Tread
- 3: Lower container
- 4: Upper container
- 5: Intermediate container
- 5a: Tapered surface
- 5b: Protrusion
- 5c: Hole
- 6: Outer ring
- 6a: Tapered surface
- 7: Bladder
- 10: Sidewall molding part
- 11: Lower sidewall molding part
- 11a: Lower sidewall design surface
- 12: Upper sidewall molding part
- 12a: Upper sidewall design surface
- 20: Tread molding part
- 20a: Tread design surface
- 21: Segment
- 22: Holder
- 22a: Recess
- 23: Design surface dividing mold part
- 24: Projection
- 25: Rotatable shaft
- 27: Spring member
- 28: Bolt
- 28a: Head
- O: Central axis

## Claims

1. A mold (1) for forming a tire (2) for vulcanization molding of an unvulcanized raw tire into a tire (2), the mold (1) comprising:
an annular tread molding part (20) which is divided into a plurality of segments (21) arranged in a circumferential direction and which is configured to be opened and closed by moving each of the segments (21) in a radial direction, wherein
each of the segments (21) includes
a design surface dividing mold part (23) which includes a tread design surface (20a) for forming a tread (2c) of the tire (2) and which is configured to rotate around a rotatable shaft (25) perpendicular to a direction of movement of the segments (21) and also to an axis of the tread molding part (20) when the tread molding part (20) is opened after vulcanization molding of the tire (2), **characterised in that**
each of the segments (21) includes a holder (22) to be driven toward a radially outer side by a container (5) when the tread molding part (20) is opened,
the design surface dividing mold part (23) is fixed to a radially inner side of the holder (22), and
the holder (22) is supported by the rotatable shaft (25) to be rotatable in relation to the container (5), and
the mold (1) comprising:
a spring member (27), attached between the holder (22) and the container (5), to retain the design surface dividing mold part (23) at a predetermined position, and, when the tread molding part (20) is opened, the spring member (27) elastically deforms to allow rotation of the holder (22) in relation to the container (5), and wherein
the spring member (27) biases a portion of the holder (22), at a distance from the rotatable shaft (25), about the container (5).

2. The mold (1) for forming the tire (2) according to claim 1, wherein
the rotatable shaft (25) is disposed on a radially outer side in a one-sided manner in relation to the center of the holder (22) in the radial direction, and on one side in a direction of the axis of the tread molding part (20) in relation to the center of the holder (22) in the direction of the axis of the tread molding part (20).

3. A method for vulcanization molding of an unvulcanized raw tire to produce a tire (2) by using a mold (1) for forming a tire (2) comprising an annular tread molding part (20) which is divided into a plurality of segments (21) arranged in a circumferential direction and which is configured to be opened and closed by moving each of the segments (21) in a radial direction, wherein
when each of the segments (21) is moved toward a radially outer side to open the tread molding part (20), the tire (20) is released from the tread molding part with a design surface dividing mold part (23) provided on the segment (21) being rotated around a rotatable shaft (25) perpendicular to a direction of movement of the segments (21) and also to an axis of the tread molding part (20), **characterised in that**
each of the segments (21) includes a holder (22) to be driven toward a radially outer side by a container (5) when the tread molding part (20) is opened,
the design surface dividing mold part (23) is fixed to a radially inner side of the holder (22), and
the holder (22) is supported by the rotatable shaft (25) to be rotatable in relation to the container (5), and
the mold (1) comprising:
a spring member (27), attached between the holder (22) and the container (5), to retain the design surface dividing mold part (23) at a predetermined position, and, when the tread molding part (20) is opened, the spring member (27) elastically deforms to allow rotation 5 of the holder (22) in relation to the container (5), and wherein
the spring member (27) biases a portion of the holder (22), at a distance from the rotatable shaft (25), about the container (5).

## Patentansprüche

1. Form (1) zum Formen eines Reifens (2) zum Vulkanisationsformen eines unvulkanisierten Rohreifens zu einem Reifen (2), wobei die Form (1) umfasst:
ein ringförmiges Laufflächenformteil (20), das in eine Vielzahl von in einer Umfangsrichtung angeordneten Segmenten (21) unterteilt ist und so konfiguriert ist, dass es durch Bewegen jedes der Segmente (21) in einer radialen Richtung geöffnet und geschlossen werden kann, wobei
jedes der Segmente (21) Folgendes einschließt:
ein Designoberflächen-Unterteilungsformteil (23), das eine Laufflächen-Designoberfläche (20a) zum Formen einer Lauffläche (2c) des Reifens (2) umfasst und das so konfiguriert ist, dass es sich um eine drehbare Welle (25) senkrecht zu einer Bewegungsrichtung der Segmente (21) und auch zu einer Achse des Laufflächenformteils (20) dreht, wenn das Laufflächenformteil (20) nach dem Vulkanisationsformen des Reifens (2) geöffnet wird, **dadurch gekennzeichnet, dass**
jedes der Segmente (21) einen Halter (22) einschließt, der durch einen Behälter (5) radial nach außen getrieben wird, wenn das Laufflächenformteil (20) geöffnet wird,
das Designoberflächen-Unterteilungsformteil (23) an einer radial inneren Seite des Halters (22) befestigt ist, und
der Halter (22) durch die drehbare Welle (25) drehbar in Bezug auf den Behälter (5) gelagert ist, und
wobei die Form (1) umfasst:
ein Federelement (27), das zwischen dem Halter (22) und dem Behälter (5) angebracht ist, um das Designoberflächen-Unterteilungsformteil (23) in einer vorbestimmten Position zu halten, und, wenn das Laufflächenformteil (20) geöffnet wird, das Federelement (27) sich elastisch verformt, um eine Drehung des Halters (22) in Bezug auf den Behälter (5) zu ermöglichen, und wobei
das Federelement (27) einen Abschnitt des Halters (22) in einem Abstand von der drehbaren Welle (25) um den Behälter (5) vorspannt.

2. Form (1) zum Formen des Reifens (2) nach Anspruch 1, wobei
die drehbare Welle (25) auf einer radial äußeren Seite einseitig in Bezug auf die Mitte des Halters (22) in der radialen Richtung und auf einer Seite in einer Richtung der Achse des Laufflächenformteils (20) in Bezug auf die Mitte des Halters (22) in der Richtung der Achse des Laufflächenformteils (20) angeordnet ist.

3. Verfahren zum Vulkanisationsformen eines unvulkanisierten Rohreifens zum Herstellen eines Reifens (2) unter Verwendung einer Form (1) zum Formen eines Reifens (2), die ein ringförmiges Laufflächenformteil (20) umfasst, das in eine Vielzahl von in einer Umfangsrichtung angeordneten Segmenten (21) unterteilt ist und so konfiguriert ist, dass es durch Bewegen jedes der Segmente (21) in einer radialen Richtung geöffnet und geschlossen werden kann, wobei
wenn jedes der Segmente (21) radial nach außen bewegt wird, um das Laufflächenformteil (20) zu öffnen, der Reifen (20) aus dem Laufflächenformteil freigegeben wird, wobei ein auf dem Segment (21) bereitgestelltes Designoberflächen-Unterteilungsformteil (23) um eine drehbare Welle (25) senkrecht zu einer Bewegungsrichtung der Segmente (21) und auch zu einer Achse des Laufflächenformteils (20) gedreht wird, **dadurch gekennzeichnet, dass**
jedes der Segmente (21) einen Halter (22) einschließt, der durch einen Behälter (5) radial nach außen getrieben wird, wenn das Laufflächenformteil (20) geöffnet wird,
das Designoberflächen-Unterteilungsformteil (23) an einer radial inneren Seite des Halters (22) befestigt ist, und
der Halter (22) durch die drehbare Welle (25) drehbar in Bezug auf den Behälter (5) gelagert ist, und
wobei die Form (1) umfasst:
ein Federelement (27), das zwischen dem Halter (22) und dem Behälter (5) angebracht ist, um das Designoberflächen-Unterteilungsformteil (23) in einer vorbestimmten Position zu halten, und, wenn das Laufflächenformteil (20) geöffnet wird, das Federelement (27) sich elastisch verformt, um eine Drehung 5 des Halters (22) in Bezug auf den Behälter (5) zu ermöglichen, und wobei
das Federelement (27) einen Abschnitt des Halters (22) in einem Abstand von der drehbaren Welle (25) um den Behälter (5) vorspannt.

## Revendications

1. Moule (1) pour former un pneu (2) pour un moulage par vulcanisation d'un pneu brut non vulcanisé en un pneu (2), le moule (1) comprenant :
une partie de moulage de bande de roulement annulaire (20) qui est divisée en une pluralité de segments (21) agencés dans une direction circonférentielle et qui est configurée pour être ouverte et fermée en déplaçant chacun des segments (21) dans une direction radiale, dans lequel
chacun des segments (21) inclut
une partie de moule de division de surface de conception (23) qui inclut une surface de conception de bande de roulement (20a) pour former une bande de roulement (2c) du pneu (2) et qui est configurée pour tourner autour d'un arbre rotatif (25) perpendiculaire à une direction de mouvement des segments (21) et également à un axe de la partie de moulage de bande de roulement (20) lorsque la partie de moulage de bande de roulement (20) est ouverte après le moulage par vulcanisation du pneu (2), **caractérisé en ce que**
chacun des segments (21) inclut un support (22) à entraîner vers un côté radialement extérieur par un récipient (5) lorsque la partie de moulage de bande de roulement (20) est ouverte,
la partie de moule de division de surface de conception (23) est fixée à un côté radialement intérieur du support (22), et
le support (22) est supporté par l'arbre rotatif (25) pour pouvoir tourner par rapport au récipient (5), et
le moule (1) comprenant :
un élément à ressort (27), fixé entre le support (22) et le récipient (5), pour retenir la partie de moule de division de surface de conception (23) au niveau d'une position prédéterminée, et, lorsque la partie de moulage de bande de roulement (20) est ouverte, l'élément à ressort (27) se déforme élastiquement pour permettre une rotation du support (22) par rapport au récipient (5), et dans lequel
l'élément à ressort (27) sollicite une portion du support (22), à distance de l'arbre rotatif (25), autour du récipient (5).

2. Moule (1) pour former le pneu (2) selon la revendication 1, dans lequel
l'arbre rotatif (25) est disposé sur un côté radialement extérieur de manière unilatérale par rapport au centre du support (22) dans la direction radiale, et sur un côté dans une direction de l'axe de la partie de moulage de bande de roulement (20) par rapport au centre du support (22) dans la direction de l'axe de la partie de moulage de bande de roulement (20).

3. Procédé de moulage par vulcanisation d'un pneu brut non vulcanisé pour produire un pneu (2) en utilisant un moule (1) pour former un pneu (2) comprenant une partie de moulage de bande de roulement annulaire (20) qui est divisée en une pluralité de segments (21) agencés dans une direction circonférentielle et qui est configurée pour être ouverte et fermée en déplaçant chacun des segments (21) dans une direction radiale, dans lequel
lorsque chacun des segments (21) est déplacé vers un côté radialement extérieur pour ouvrir la partie de moulage de bande de roulement (20), le pneu (20) est libéré de la partie de moulage de bande de roulement avec une partie de moule de division de surface de conception (23) disposée sur le segment (21) qui tourne autour d'un arbre rotatif (25) perpendiculaire à une direction de déplacement des segments (21) et également à un axe de la partie de moulage de bande de roulement (20), **caractérisé en ce que**
chacun des segments (21) inclut un support (22) à entraîner vers un côté radialement extérieur par un récipient (5) lorsque la partie de moulage de bande de roulement (20) est ouverte,
la partie de moule de division de surface de conception (23) est fixée à un côté radialement intérieur du support (22), et
le support (22) est supporté par l'arbre rotatif (25) pour pouvoir tourner par rapport au récipient (5), et
le moule (1) comprenant :
un élément à ressort (27), fixé entre le support (22) et le récipient (5), pour retenir la partie de moule de division de surface de conception (23) au niveau d'une position prédéterminée, et, lorsque la partie de moulage de bande de roulement (20) est ouverte, l'élément à ressort (27) se déforme élastiquement pour permettre une rotation 5 du support (22) par rapport au récipient (5), et dans lequel
l'élément à ressort (27) sollicite une portion du support (22), à distance de l'arbre rotatif (25), autour du récipient (5).
